(19) Europäisches Patentamt
European Patent Office
Office européen des brevets

(11) **EP 1 816 389 A1**

(12) **EUROPEAN PATENT APPLICATION**

(43) Date of publication:
08.08.2007 Bulletin 2007/32

(51) Int Cl.:
*F16M 11/08* (2006.01)     *F16M 11/18* (2006.01)

(21) Application number: 07250459.0

(22) Date of filing: 02.02.2007

(84) Designated Contracting States:
AT BE BG CH CY CZ DE DK EE ES FI FR GB GR HU IE IS IT LI LT LU LV MC NL PL PT RO SE SI SK TR
Designated Extension States:
AL BA HR MK YU

(30) Priority: 02.02.2006 KR 20060009965

(71) Applicant: Samsung Electro-Mechanics Co., Ltd
Yeongtong-gu
Suwon-si
Gyeonggi-do 443-743 (KR)

(72) Inventors:
• Woo, Sang-Min
Suwon-si, Gyeonggi-do 443-370 (KR)

• Park, Kyoung-Shin
208-604 Woncheon Jugong 2danji
Yeongtong-gu, Suwon-si
Gyeonggi- 443-756 (KR)
• Choi, Dong-Won
103-904 Woncheon Jugong 1 danji
Yeongtong-gu, Suwon-si
Gyeonggi- 443-755 (KR)
• Lee, Chil-Sung
103-809 Samsung APT
Gyeonggi-do 441-440 (KR)
• Kim, Jae-Kyung
401-660-2, Il-dong
Gyeonggi-do 426-861 (KR)

(74) Representative: Mounteney, Simon James
Marks & Clerk
90 Long Acre
London WC2E 9RA (GB)

(54) **Display rotating apparatus**

(57) A display (15) rotating apparatus capable of avoiding or reducing a slip phenomenon which occurs by rotary inertia. The display (15) rotating apparatus comprises: a motor (13) providing a driving force for rotating a display; and a motor driving device (30) driving to rotate and stop gradually by increasing a rising time and a falling time of a rotation command signal. The display rotating apparatus can remove the slip phenomenon generated mechanically by increasing or decreasing slowly an applying voltage and/or current applied to the motor (13) and reduce the sway by vibration at the time of stopping the display (15).

FIG. 1

EP 1 816 389 A1

**(Cont. next page)**

| rotation command signal applying unit | RC integral circuit | H-bridge |
|---|---|---|
| 31 | 33 | 35 |

30

15

17

11

# Fig. 3

**Description**

Field of the Invention

The present invention relates to a display rotating apparatus, and in particular, a display rotating apparatus capable of avoiding or reducing a slip phenomenon which occurs by rotary inertia.

Background of the Invention

As the size and weight of displays such as computer monitors and televisions have increased, display rotation apparatus has been widely used. The rotation apparatus is able to change the orientation of the display and direct it toward a user automatically by using a motor and so forth.

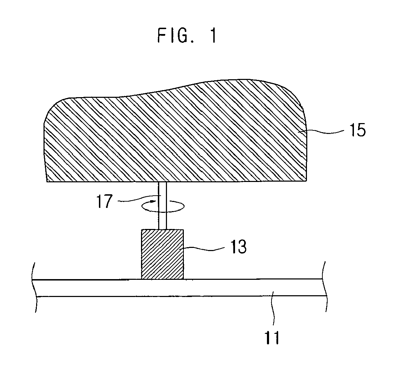

A conventional display rotating apparatus is illustrated in Fig. 1. Referring to Fig. 1, the conventional display rotating apparatus includes a stand 11 fixed to the floor and a motor 13 having an end fixed to the stand 11 and an opposing end connected to a display 15 through a shaft 17. The motor 13 is connected to an external control device (not shown) and enables the user to control the position of the display 15 using a remote controller and so on. The motor 13 has reduction gears in its interior because the display is relatively heavy and must be rotated slowly.

Although the display rotating apparatus uses a power supply for driving the motor 13, it is necessary for the user rotate the display manually when there is no power supply to the rotation apparatus.

Revolution per minute (RPM) is defined as the number of revolutions per minute when the motor 13 is driven with a rated power under a rated voltage and a rated frequency. Several magnetic poles are generated inside the motor 13. A motor is said to have two-poles when a couple of poles are generated. Similarly, it is defined as four-poles when two couples of poles are generated; and likewise, it is defined as six-poles when three couples of poles are generated.

If three phase alternating current is applied to a three phase coil, the magnetic pole is generated in relation to the number of poles; the magnetic pole is rotated relative to the alternation of the current. Essentially, the coil is stationary and the magnetic pole rotates and as a result generates a rotating magnetic field. Since the rotating magnetic field moves to successive poles per half cycle, the synchronous rotational speed of the magnetic field can be defined as Equation 1. The synchronous speed in RPM is given by:

$$Ns = 120 \, f \, / \, P \; (rpm) \qquad\qquad [\text{ Equation 1 }]$$

where

    f = frequency (Hz); and
    P = number of poles

The actual speed of the motor speed depends on the load it must drive. Increasing the load on the motor causes it to slow down. This is called slip.

When a power is supplied from the external power supply to rotate the motor 13 of the display rotating apparatus, the slip phenomenon can occur due to rotational inertia of the display 15. The slip phenomenon can also occur at the instant when the power supply is terminated.

The slip phenomenon deteriorates the stability of the display at the time of moving and stopping the rotating display. In addition, swaying can also occur through vibration at the time of stopping the rotating display.

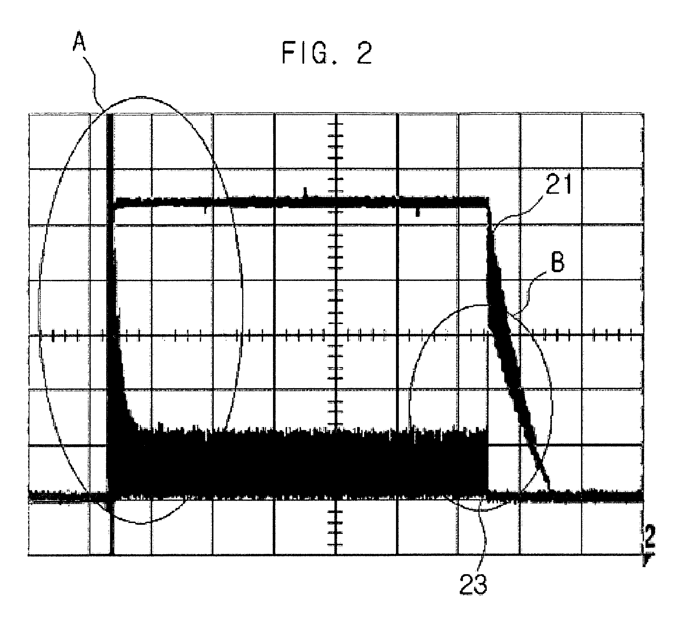

Fig. 2 illustrates voltage 21 and current 23 being applied to the motor 13. The graph in black indicates the voltage 21, and the graph in grey indicates the current 23. The area A shows that the current increases rapidly when a voltage is applied to the motor 13, and the area B shows that the current decreases rapidly when the voltage supply to the motor 13 is terminated. These rapid changes of the current can cause malfunction of the circuits for driving the motor 13.

Summary of the Invention

In a first aspect of the present invention, there is provided a display rotating apparatus comprising a motor for providing a driving force for rotating a display, and a motor driving means for driving said motor, wherein said motor driving means is operable to output a control signal for driving said motor by varying a rising time and/or a falling time of a rotation command signal.

The rotation command signal may be a set of binary signals including rotation signals and stop signals.

Preferably, said motor driving means comprises a rotation command signal input unit for generating said rotation command signal to rotate said motor in accordance with an input signal, an RC integral circuit for generating an integral signal, said integral signal determining the rising time and the falling time of said rotation command signal, and an H-bridge for converting said integral circuit into a motor input signal so as to control direction of rotation of said motor.

Preferably, said RC integral circuit further comprises a resistor and/or a capacitor and said RC integral circuit is operable to generate said integral signals by varying values of said resistor and said capacitor.

According to the above aspect of the present invention, there is further provided a means for controlling rotation speed of said motor based on magnitude of said motor input signal.

The magnitude of said motor input signal may be determined by rate of change of said integral signal.

Brief description of the drawings

These and/or other aspects and advantages of the present general inventive concept will become apparent and more readily appreciated from the following description of the embodiments, taken in conjunction with the accompanying drawings of which:

Fig. 1 is a schematic diagram of a conventional display rotating apparatus;

Fig. 2 illustrates voltage and current being applied to a motor;

Fig. 3 illustrates a display rotating apparatus in accordance with a first embodiment of the present invention;

Fig. 4 shows a motor having a general H-bridge structure;

Fig. 5 illustrates a circuit diagram of a basic RC integral circuit;

Fig. 6 shows a step response of the RC integral circuit; and

Fig. 7 illustrates an integral signal (voltage) generated from the RC integral circuit and a motor applying signal (current) in accordance with an embodiment of the present invention.

Detailed description

The descriptions set forth below merely illustrate the principles of the present invention. Therefore, those skilled in the art could devise various methods and apparatus thereof which realise the principles of the present invention and which do not depart from the spirit and scope of the present invention. Also, it is to be appreciated that not only the principles, viewpoints, and embodiments of the present invention, but all detailed descriptions listing the particular embodiments are intended to include structural and functional equivalents.

Other objectives, particular advantages, and novel features of the present invention will further be clarified by the detailed descriptions and preferred embodiments set forth below with reference to the accompanying drawings. In describing the invention, detailed explanation of the prior art will be omitted when it is deemed to unnecessarily obscure the crux of the invention. Numerals used in the description (for example, a first, a second, etc.) are merely used to distinguish equal or similar items in an ordinal manner.

Hereinafter, embodiments of the invention will be described in detail with reference to the accompanying drawings.

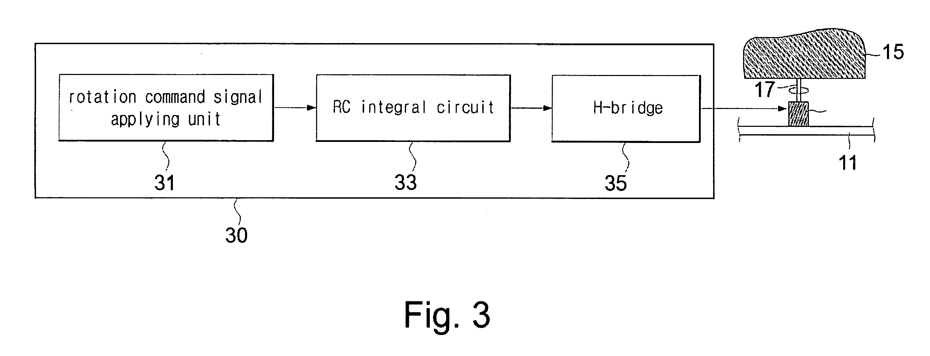

Fig. 3 shows a schematic configuration of a display rotating apparatus in accordance with a first embodiment of the present invention. Referring to Fig. 3, the display rotating apparatus includes a stand 11, a motor 13, a display 15, a shaft 17 and a motor driving device (not shown). The display 15 may be a freestanding display, a wall mounted display and so on. Furthermore, it could also be a television, a monitor, and so on.

The display rotating apparatus includes the stand 11 fixed to the floor and the motor 13 having one end fixed to the stand 11 and having the other end connected to the display 15 through the shaft 17. The motor 13 is connected to a motor driving device and enables the user to control the position of the display using a remote control and so on.

A reduction gear is also included within the motor 13 so as to rotate the display 15 (which is relatively heavy) gradually. The shaft 17 rotates integrally with the motor 13, and is connected with the display 15. Therefore, the rotation of the display 15 corresponds with the rotation of the shaft 17. Essentially, the motor 13 provides a driving force for rotating the display 15.

In an alternative configuration, one end of the motor 13 is fixed to the display 15, and the other end of the motor 13 is connected to the stand 11 through the shaft 17. In this configuration, the display 15 and the motor 13 rotate integrally, centering on the shaft 17.

The motor driving device drives the motor 13 in order to rotate the display 15 in a clockwise and/or counterclockwise direction according to a rotation command signal. The rotation command signal is controlled by the user through the remote controller and so on. The rotation command signal includes information of a rotation direction such as clockwise and/or counterclockwise, and it may also include other information such as speed of rotation.

The motor driving device provides a motor applying current to rotate the motor 13 when the rotation command signal is applied. However it does not provide a motor applying current when the rotation command signal is not applied.

The motor driving device 30 includes a rotation command signal applying unit 31, an RC integral circuit 33, and an H-bridge 35.

The rotation command signal corresponding to the rotation of the display 15 is applied through the rotation command signal applying unit 31 using an external signal fed by the user. The rotation command signal applying unit 31 then transmits the rotation command signal to the RC integral circuit 33 for driving the motor 13. The rotation command signal is a binary signal divided into rotation signals and stop signals.

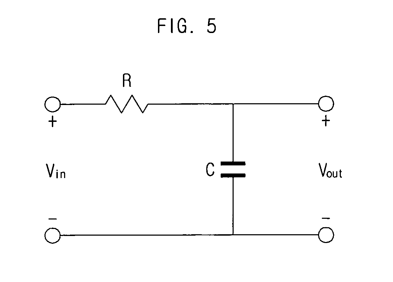

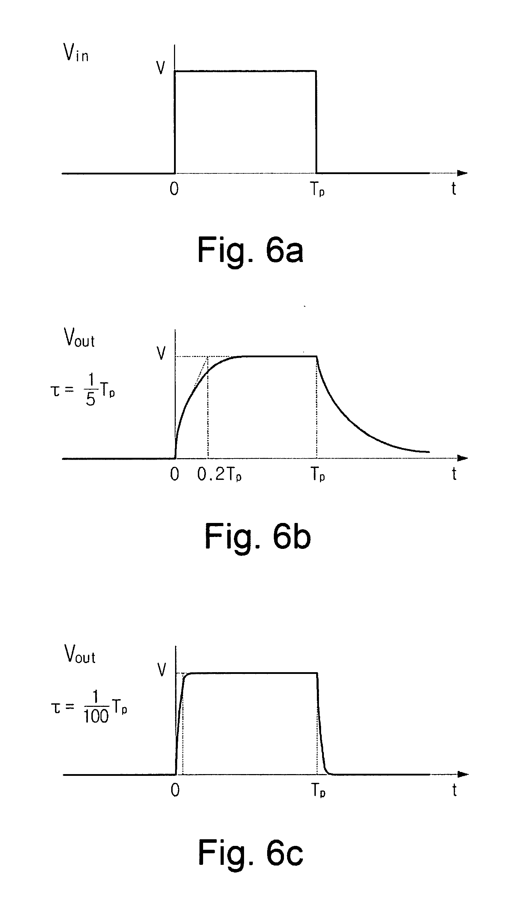

The RC integral circuit 33 is a low pass filter (LPF) comprising a resistor and a capacitor. The RC integral circuit 33 generates an integral signal by increasing the rising time and the falling time of the rotation command signal so that the rotation command signal transmitted from the rotation command signal applying unit 31 does change its magnitude rapidly. The operational theory is described below with reference to Fig. 5 and Fig 6.

The H-bridge 35 converts the integral signal, that is the rotation command signal of which both the rising time and the falling time are increased in the RC integral circuit 33, to a motor applying current to rotate the motor 13 clockwise or counterclockwise, and provides an output to the motor 13.

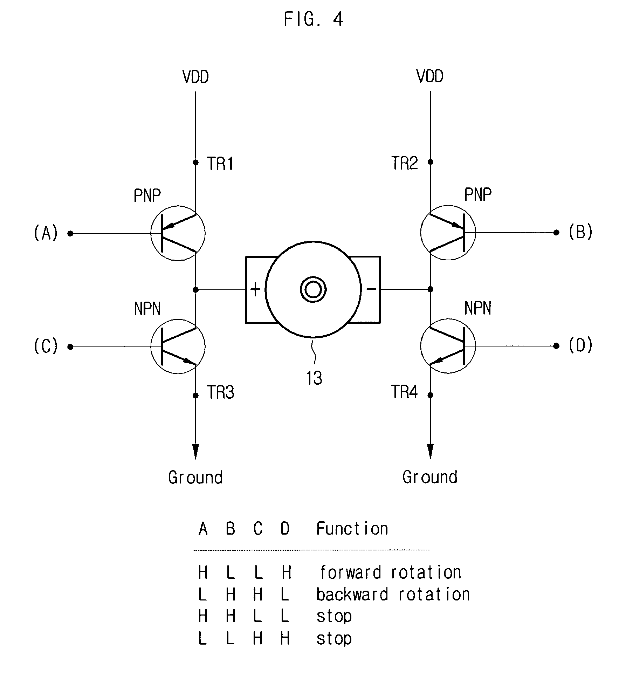

Fig. 4 shows a motor having a general H-bridge structure. Referring to Fig. 4, each transistor (TR1, TR2, TR3, RE4) connected with the motor 13 plays a role of a switch.

Referring to the table shown at the bottom of Fig. 4, if H signal is applied to A and D, and L signal is applied to the others. TR1 and TR4 are respectively connected electrically to rotate the motor 13 forward. Likewise, if H signal is applied to B and C and L signal is applied to the others, TR2 and TR3 are respectively connected electrically to rotate the motor 13 backward. If H signal is applied to A and B or to C and D, the motor 13 is stopped. The transistor may be a field effect transistor (FET).

The rotation direction of the motor 13 is determined by means of the method described in the above paragraph, and the rotation speed of the motor 13 is determined according to the magnitude of the H signal and/or L signal.

By using the rotation command signal, H signal and/or L signal are applied to the A, B, C, D terminals so as to function in accordance to the table in Fig. 4. Since the rising time and the falling time of the rotation command signal are increased, H signal and/or L signal applied to A, B, C, D terminals will change gradually instead of rapidly. Therefore, the H signal and/or the L signal control the motor applying current through each transistor (TR1, TR2, TR3, TR4) to rotate the motor 13 gradually.

Hereinafter the theory of increasing the rising time and the falling time of the rotation command signal is described referring to Figs. 5 and 6a, 6b and 6c.

Fig. 5 is a circuit diagram of a basic RC integral circuit and Figs. 6a to 6c show responses of a step input of the RC integral circuit. The rotation command signal issues a rotation signal or a step signal. The rotation command signal is a binary signal. Essentially, a high signal is issued in a case of rotation and a low signal is issued in a case of stop. Therefore, the rotation command signal has a rectangular waveform as shown in Fig 6a.

Since the rotation command signal is generally in the form of voltage, the rotation command signal of the rotation command signal applying unit 31 is defined as Vin, and the integral signal increasing the rising time and the falling time of the rotation command signal through the RC integral circuit 33 is defined as Vout.

Referring to Fig. 5, the RC circuit comprises a resistor and a capacitor. The resistor and the capacitor are connected serially and the rotation command signal, Vin is applied to both ends of the resistor and the capacitor. The voltage at both ends of the capacitor is defined as Vout. The relationship between Vin and Vout is described in Equation 2 expressed in terms of frequency and time. Here, Vin is a step input signal having a value of V.

$$\frac{V_{out}}{V_{in}} = \frac{1}{1 + SRC}$$

$$V_{out} = V - V e^{-\frac{t}{\tau}} \quad (\text{wherein, } \tau = RC) \qquad \text{[ Equation 2 ]}$$

The step response waveform of Vout is shown in Figs. 6b and 6c. If the time for which the value of Vin is maintained at V is Tp, the step response waveforms in the cases of T= Tp / 5 and T= Tp / 100 are shown in Figs 6b and 6c respectively. T is a time constant it is expressed as T= RC in the circuit in Fig. 5. A time constant is the time at which the output waveform becomes $e^{-1}$ times (about 63.2%) of the input waveform.

When the time constant T is relatively small, compared with Tp, the generated output waveform is essentially similar to the input waveform. This is because the rising time and the falling time of the output waveform is very short as shown in the case of T= Tp/100 in Fig. 6c. In this case, the overshoot is as illustrated in Fig. 2 liable to occur. Otherwise, referring to the case of T= Tp/5 as shown in Fig. 6b, an output waveform is generated, in which the rise edge and the falling edge is similar to that of a trapezoid waveform, instead of a rectangular waveform. This is because of the increase in the rising time and the falling time of the output waveform.

Therefore, by controlling the values of the resistor and the capacitor, the rotation command signal having a rectangular waveform is converted to a signal with a trapezoid waveform having various rising times and falling times. Therefore, the position of the display 15 is changed and rotated gradually at the instant when the motor starts or stops the rotation.

In the present invention, as shown in Fig. 5,the RC integral circuit includes a resistor and a capacitor. Therefore, it will be appreciated by those skilled in the art that it is possible to modify the RC integral circuit to another circuit having the same function and the same operational theory, without departing from the scope of the present invention.

The present invention ensures that the circuit of the motor driving device does not overwork, and prevents the slip phenomenon by rotary inertia of the display 15 and also prevents rotation or vibration of the display 15 the instant when the motor 13 stops its rotation.

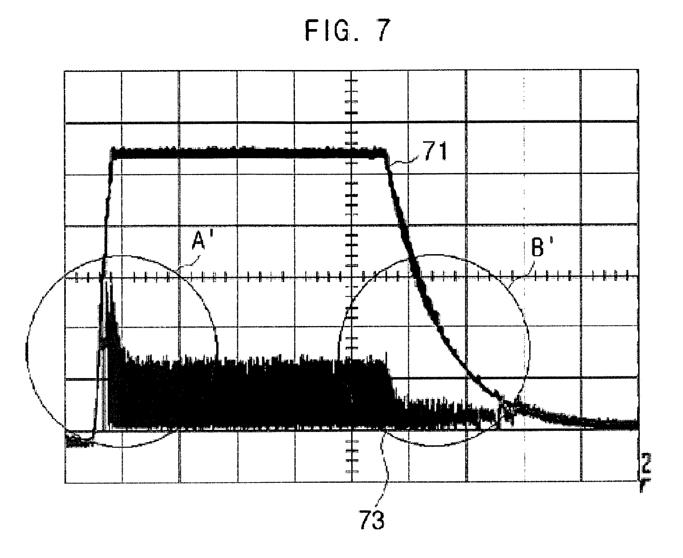

Fig. 7 shows the integral signal (voltage) and the motor applying signal (current) generated in the RC integral circuit 33 according to an embodiment of the present invention. The graph in black represents the integral signal 71 and the graph in grey represents the motor applying signal 73.

The motor applying signal does not have a rapid increase, but a gradual increase by applying the integral signal, of which the rising time is increased by the RC integral circuit 33, to the motor 13 in region A' in Fig. 7, compared to Fig. 2. Likewise, the motor applying signal does not have a rapid decrease, but a gradual decrease by applying the integral signal, of which the falling time is increased by the RC integral circuit 33, to the motor 13 in region B' in Fig. 7, compared to Fig. 2.

From the foregoing description, it can be shown that the above-mentioned objects are substantially accomplished.

Furthermore, the display rotating apparatus can avoid or reduce the slip phenomenon controlling the voltage and/or current applied to the motor and it can also reduce sway caused by the vibration at the time of stopping the rotation of the display.

While the invention has been described with reference to the disclosed embodiments, it is to be appreciated that those skilled in the art can change or modify the embodiments without departing from the scope and spirit of the invention or its equivalents as stated below in the claims.

**Claims**

1. A display rotating apparatus comprising:

   a motor for providing a driving force for rotating a display; and
   a motor driving means for driving said motor, wherein said motor driving means is operable to output a control signal for driving said motor by varying a rising time and/or a falling time of a rotation command signal.

2. A display rotating apparatus in accordance with claim 1 wherein said rotation command signal is a set of binary signals including rotation signals and stop signals.

3. A display rotating apparatus in accordance with claim 1 or claim 2, wherein said motor driving means comprises:

   a rotation command signal input unit for generating said rotation command signal to rotate said motor in accordance to an input signal;
   an RC integral circuit for generating an integral signal, said integral signal determining the rising time and the falling time of said rotation command signal; and
   an H-bridge for converting said integral circuit into a motor input signal so as to control direction of rotation of said motor.

4. A display rotation apparatus in accordance with claim 3 wherein said RC integral circuit further comprises a resistor and/or a capacitor and said RC integral circuit is operable to generate said integral signals by varying values of said resistor and said capacitor.

5. A display rotating apparatus in accordance with any preceding claim and further comprising a means for controlling rotation speed of said motor based on magnitude of said motor input signal.

6. A display rotating apparatus in accordance with any one of claims 3 to 5 wherein said magnitude of said motor input signal is determined by rate of change of said integral signal.

FIG. 1

FIG. 2

Fig. 3

FIG. 4

| A | B | C | D | Function |
|---|---|---|---|---|
| H | L | L | H | forward rotation |
| L | H | H | L | backward rotation |
| H | H | L | L | stop |
| L | L | H | H | stop |

FIG. 5

$V_{in}$

Fig. 6a

$V_{out}$

$\tau = \frac{1}{5}T_p$

Fig. 6b

$V_{out}$

$\tau = \frac{1}{100}T_p$

Fig. 6c

## FIG. 7

**European Patent Office**

**EUROPEAN SEARCH REPORT**

Application Number

EP 07 25 0459

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JP 2005 106877 A (SANYO ELECTRIC CO) 21 April 2005 (2005-04-21) * abstract * * figures 1,2 * ----- | 1-6 | INV. F16M11/08 F16M11/18 |
| Y | WO 03/077322 A (INT RECTIFIER CORP [US]) 18 September 2003 (2003-09-18) * figures 1,8,10 * * paragraph [0009] * * paragraphs [0029] - [0031] * * paragraphs [0058] - [0062] * ----- | 1-6 | |
| A | GB 2 071 939 A (SONY CORP) 23 September 1981 (1981-09-23) * the whole document * ----- | 1-6 | |
| | | | TECHNICAL FIELDS SEARCHED (IPC) H02P F16M H04N |

The present search report has been drawn up for all claims

| Place of search | Date of completion of the search | Examiner |
|---|---|---|
| The Hague | 4 July 2007 | TERRIER DE LA CHAISE |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 07 25 0459

This annex lists the patent family members relating to the patent documents cited in the above-mentioned European search report.
The members are as contained in the European Patent Office EDP file on
The European Patent Office is in no way liable for these particulars which are merely given for the purpose of information.

04-07-2007

| Patent document cited in search report | | | Publication date | Patent family member(s) | | Publication date |
|---|---|---|---|---|---|---|
| JP 2005106877 | A | | 21-04-2005 | NONE | | |
| WO 03077322 | A | | 18-09-2003 | AU | 2003202997 A1 | 22-09-2003 |
| | | | | CN | 1830091 A | 06-09-2006 |
| | | | | EP | 1481426 A2 | 01-12-2004 |
| | | | | JP | 2005519576 T | 30-06-2005 |
| | | | | US | 2003164545 A1 | 04-09-2003 |
| | | | | US | 2004189229 A1 | 30-09-2004 |
| GB 2071939 | A | | 23-09-1981 | AT | 376851 B | 10-01-1985 |
| | | | | AT | 90281 A | 15-05-1984 |
| | | | | CA | 1160279 A1 | 10-01-1984 |
| | | | | DE | 3107623 A1 | 24-12-1981 |
| | | | | FR | 2477337 A1 | 04-09-1981 |
| | | | | IT | 1138959 B | 17-09-1986 |
| | | | | JP | 1501670 C | 28-06-1989 |
| | | | | JP | 56123793 A | 29-09-1981 |
| | | | | JP | 63001039 B | 11-01-1988 |
| | | | | US | 4385265 A | 24-05-1983 |

EPO FORM P0459

For more details about this annex : see Official Journal of the European Patent Office, No. 12/82